Europäisches Patentamt

European Patent Office

Office européen des brevets

(19)

(11) Veröffentlichungsnummer: **0 019 907**
**B1**

(12) **EUROPÄISCHE PATENTSCHRIFT**

(45) Veröffentlichungstag der Patentschrift: **02.05.84**

(51) Int. Cl.³: **G 21 C 9/00**

(21) Anmeldenummer: **80102958.8**

(22) Anmeldetag: **28.05.80**

(54) Verfahren und Einrichtung zur Rekombination von Wasserstoff, der im Sicherheitsbehälter einer Kernreaktoranlage eingeschlossen ist.

(30) Priorität: **05.06.79 DE 2922717**

(43) Veröffentlichungstag der Anmeldung:
**10.12.80 Patentblatt 80/25**

(45) Bekanntmachung des Hinweises auf die Patenterteilung:
**02.05.84 Patentblatt 84/18**

(84) Benannte Vertragsstaaten:
**AT CH FR IT LI**

(56) Entgegenhaltungen:
**DE - A - 2 451 438**
**DE - A - 2 633 113**
**GB - A - 1 123 585**

(73) Patentinhaber: **BROWN BOVERI REAKTOR GmbH**
**Dudenstrasse 44**
**D-6800 Mannheim 1 (DE)**

(72) Erfinder: **Stiefel, Max, Ing.grad.**
**Thüringerstrasse 69**
**D-6800 Mannheim 31 (DE)**

Courier Press, Leamington Spa, England.

EP 0 019 907 B1

# 0 019 907

Verfahren und Einrichtung zur Rekombination von Wasserstoff, der im Sicherheitsbehälter einer Kernreaktoranlage eingeschlossen ist

Die Erfindung betrifft ein Verfahren zur Rekombination von im Sicherheitsbehälter einer Kernreaktoranlage eingeschlossenen Wasserstoff, wobei unter Verwendung von Inertgas ein den Wasserstoff abbauendes Pulver in den Sicherheitsbehälter eingebracht wird.

Ein derartiges Verfahren ist aus der DE—A—26 33 113 bekannt.

Bei Auftreten eines Störfalles in einer Kernreaktoranlage ist es nicht auszuschließen, daß sich innerhalb des Sicherheitsbehälters Wasserstoff bildet. Es ist sicherzustellen, daß der Wasserstoffanteil der Sicherheitsbehalteratmosphäre stets so niedrig gehalten wird, daß eine Knallgasbildung ausgeschlossen ist.

Zur Erreichung dieses Ziels ist nach der DE—A—26 33 113 das Druckgefäß und der Primärkreislauf mit einer doppelwandigen Umhüllung versehen. Die Umhüllung enthält unter Inertgasdruck einen sauerstoffabgebenden Stoff in Pulverform. Beim Bruch eines Primärteiles bricht auch die doppelwandige Umhüllung und gibt das Pulver frei. Sammelt sich dabei Wasserstoff in von der Bruchstelle entfernten Bereichen des vom Sicherheitsbehälter bregrenzten Raumes, so liegt der Wasserstoff außerhalb der Reichweite des freigegebenen Pulvers. Eine Knallgasbildung in diesen Bereichen ist daher nicht auszuschließen. Das Primärsystem mit einer Umhüllung zu versehen ist sehr aufwendig. Außerdem ist diese Bauweise aus sicherheitsphilosophischen Gründen bedenklich, da eine wiederkehrende Prüfung der tragenden Bauteile des von der Umhüllung bedeckten Primärsystems nicht möglich ist. Darüberhinaus ist es ferner von Nachteil, daß das Abbausystem nur wirksam werden kann, wenn der unwahrscheinliche Störfall des Primärkreislaufbruches auftritt.

Weiterhin ist es bekannt, die Sicherheitsbehälteratmosphäre vor Erreichen der unteren Explosionsgrenze über einen außerhalb des Sicherheitsbehälters angeordneten thermischen oder katalytischen Rekombinator weitgehend vom Wasserstoff zu befreien und in den Sicherheitsbehälter zurück zu pumpen. Der Aufbau eines derartigen Rekombinators ist aus der DE—A—24 51 438 bekannt. Diese Maßnahme hat den Nachteil, daß ein großer Teil der im Sicherheitsbehälter freigesezten Spaltprodukte in den Rekombinatoren zurückgehalten bzw. aufkonzentriert wird, so daß Strahlenquellen außerhalb des Sicherheitsbehälters entstehen und die Arbeit in diesen Bereichen zusätzlich erschweren. Um alle Bereiche im Sicherheitsbehälter erfassen zu können müssen viele Rohrleitungen mit relativ großen Querschnitten innerhalb und außerhalb des Sicherheitsbehälters verlegt und/oder ein zusätzliches Umwälzsystem zur Homogenisierung der Sicherheitsbehälteratmosphäre vorgesehen werden. Ein weiterer Nachteil ist darin zu sehen, daß die Vergiftung der Katalysatoren durch Spaltprodukte noch nicht hinreichend bekannt ist und damit die Auslegung von katalytischen Rekombinatoren herkömmlicher Bauart unsicher ist Außerdem ist zu bedenken, daß bei dem Austausch der Sicherheitsbehälteratmosphäre örtliche Konzentrationen oberhalb 4 Vol.% Wasserstoff entstehen können. Um ein Zünden dieser Knallgasatmosphäre zu vermeiden, sind aufwendige Detonationssicherungen außerhalb des Sicherheitsbehälters erforderlich.

Es stellt sich daher die Aufgabe ein Verfahren der eingangs genannten Art anzugeben bei dem eine Rekombination des Wasserstoffes in dem gesamten vom Sicherheitsbehälter begrenzten Raum unabhängig von dem Standort und dem Ausmaß des Störfalls möglich ist.

Gelöst wird die Aufgabe erfindungsgemäß dadurch, daß als Pulver ein an sich bekannter Katalysator verwendet wird, und daß das Katalysatorpulver mit dem Inertgas aus einem außerhalb des Sicherheitsbehälters angeordneten Vorratsbehälter überwiegend in den oberen Bereich des Sicherheitsbehälters eingeblasen wird.

Der fein verteilte Katalysator senkt die Wasserstoffkonzentration auf einfache Weise. Er wird mit geringen Gasmengen eingeblasen und senkt während seines langsamen Absinkens die Wasserstoffkonzentration in gesamten Innenraum des Sicherheitsbehälters.

Vorzugsweise wird als Katalysatorpulver ein $\gamma$-Aluminiumoxid (modifiziertes Aluminiumoxid) mit 0,2% Palladium verwendet.

Zur Verbesserung der Fluidisierung weist das Katalysatorpulver eine Korngröße von 20—60 tausendstel Millimeter auf.

Zur Durchführung des Verfahrens wird eine Einrichtung vorgeschlagen, die dadurch gekennzeichnet ist, daß eine mit einer Zellenradschleuse versehene Dosierleitung vom Vorratsbehälter zu einem Injektor hinführt, daß der Injektor von einem Inertgasstrom durchflossen ist und an seiner Austrittseite wenigstens eine zum Innenraum des Sicherheitsbehälters führende Verbindungsleitung aufweist.

Eine besondere Ausbildung der Einrichtung sieht vor, daß am Vorheitsbehälter im Bereich des Anschlusses der Dosierleitung ein Rüttler angreift. Damit wird eine Brückenbildung im Behälter verhindert.

Eine am Behälterdeckel angeordnete Be- und Entlüftungseinrichtung erleichtert den Austritt des Katalysatorpulvers.

Gemäß einer anderen Ausgestaltung der Einrichtung weist der Vorratsbehälter in seinem unteren Teil eine seinen Querschnitt überspannende Sinterplatte auf. Dabei ist eine Inertgas führende Leitung mit dem vom Vorratsbehälterboden und der Sinterplatte begrenzten Raum verbunden, oberhalb der Sinterplatte ist ein Fluidbed (feinverteilter Katalysator) gebildet und in diesem Fluidbed ist ein Injektor vorgesehen, dessen Ausgangsleitung mit einem außerhalb des Vorratsbehälters angeordneten, ebenfalls Inertgas beaufschlagten zweiten Injektor verbunden ist.

Diese Ausgestaltung kommt ohne Zellenradschleuse und ohne Rüttler aus.

Zur optimalen Verteilung des Katalysators ist die Verbindungsleitung zum Innenraum des Sicherheitsbehälters mit Verteilungsleitungen ausgerüstet, die jeweils ein Absperrventil aufweisen.

Sind im Sicherheitsbehälter größere Mengen Katalysatorgifte oder ist eine relative Luftfeuchtigkeit von mehr als 100% vorhanden, so werden die Einrichtungen zur Durchführung des Verfahrens zum Einblasen von pulverförmigen Stoffen zur Absorption von Katalysatorgiften oder zum Aufsaugen von Feuchtigkeit verwendet um den Katalysatorverbrauch zu reduzieren.

Anhand der schematischen Figuren 1 bis 3 wird das erfindungsgemäße Verfahren und die Einrichtung zur Durchführung des Verfahrens beschrieben.

Dabei zeigen:

Fig. 1 einen Längsschnitt durch ein Reaktorgebäude,

Fig. 2 einen Teil der Einrichtung zum Einblasen des Katalysatorpulvers in größerem Maßstab und

Fig. 3 eine andere Ausbildung der Einrichtung nach Fig. 2.

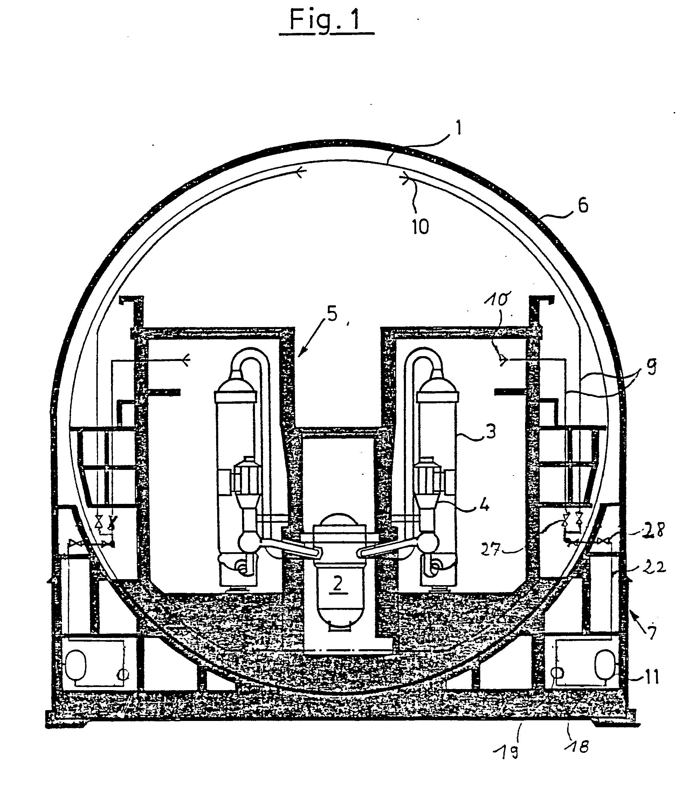

Der Längsschnitt durch eine Kernreaktoranlage läßt gemäß Fig. 1 einen Sicherheitsbehälter 1 erkennen, der das Dampferzeugungssystem umschließt. Das Dampferzeugungssystem besteht im wesentlichen aus dem den Reaktorkern einschließenden Reaktordruckbehälter 2, den Dampferzeugern 3 und den Primärkühlmittelpumpen 4. Diese Komponenten sind von einer Betonabschirmung 5 umgeben. Den Sicherheitsbehälter umgibt eine Betonhülle 6, die in ihrem unteren Bereich sogenannte Ringräume 7 begrenzt.

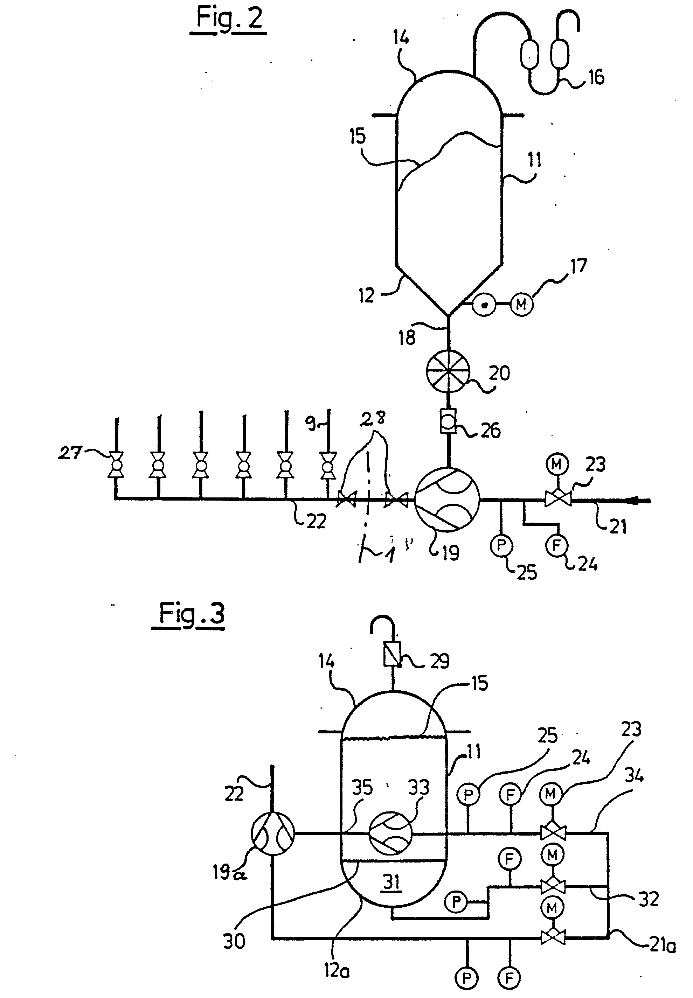

In einem dieser Ringräume ist die Einrichtung zur Durchführung des erfindungsgemäßen Verfahrens angeordnet. Aus einem Vorrats behälter 11 wird über einen Injektor 19 sowie Leitungen 18, 22 und Absperrventile 28 das Katalysatorpulver in das Innere des Sicherheitsbehälters gefördert. Wenigstens zweifach angeordnete Verteilungsleitungen 9, die mit einem Absperrventil 27 ausgestattet sind dienen zur Verteilung des Katalysators im Sicherheitsbehälter. Die mit Düsen 10 bestückten freien Enden der Leitungen 9 ragen in verschiedene Bereiche des Sicherheitsbehälters. Die größere Anzahl der Leitungen 9 enden jedoch im oberen Bereich des Sicherheitsbehälter 1, da von hier aus das Katalysatorpulver selbsttätig nach unten sinkt und dabei den Wasserstoffanteil in der Sicherheitsbehälteratmosphäre absenkt. Weitere Einzelheiten der Einrichtung sind in der Fig. 2 beschrieben.

Gemäß Fig. 2 besteht die Einrichtung zum Einblasen des Katalysatorpulvers aus einem Vorratsbehälter 11 der einen trichterförmigen Boden 12 und einen abnehmbaren Deckel 14 aufweist. Der Vorratsbehälter ist etwa bis zur Linie 15 mit Katalysatorpulver, das sich aus $\gamma$-Aluminiumoxid mit 0,2% Palladium zusammensetzt, gefüllt. Die Be- und Entlüftung des Vorratsbehälters 11 erfolgt über eine mit Paraffinöl ausgestatte Vorlage 16. Ein motorgetriebener Rüttler 17 berührt den Vorratsbehälterboden 12 von außen und verhindert durch sein Vibrieren Brückenbildung des Katalysatorpulvers im Vorratsbehälter 11. Vom Vorratsbehälterboden 12 zweigt eine Dosierleitung 18 ab, die mit einem Injektor 19 verbunden ist. Eine in die Dosierleitung eingebaute Zellenradschleuse 20 fördert die notwendige Menge Katalysatorpulver in den Injektor. Weiterhin ist zur Sichtkontrolle ein Schauglas 26 in die Dosierleitung eingebaut. Über die Leitung 21 wird als Inertgas Stickstoff mit einem Druck von 510 bar in den Injektor eingeführt. Der Stickstoffstrom reißt das Katalysatorpulver mit und bläst es über die Verbindungsleitung 22 und verschiedene Verteilungsleitungen 9 in den Sicherheitsbehälter. In der Leitung 21 ist ein Regelventil 23 sowie eine Durchflußmesseinrichtung 24 und eine Druckmeßeinrichtung 25 installiert.

Die Verteilungsleitungen 9 weisen Kugelhähne 27 auf, so daß die Verteilungsleitungen einzeln, in Gruppen oder gemeinsam beschickt werden können.

Inner- und außerhalb des Sicherheitsbehälters ist die Verbindungsleitung 22 aus Sicherheitsgründen mit Absperrventilen 28 versehen.

Fig. 3 zeigt ein anderes Ausführungsbeispiel einer Einrichtung zur Durchführung des erfindungsgemäßen Verfahrens. Ein mit Klöpperboden 12a versehener Vorratsbehälter 11 ist bis zur Linie 15 mit Katalysatorpulver gefüllt. Ein abnehmbarer Deckel 14 dient zum dichten Verschließen des Vorratsbehälters. Am Deckel sorgt eine Rückschlagklappe 29 für die Entlüftung des Vorratsbehälters. Im unteren Teil des Vorratsbehälters ist eine den Querschnitt desselben überspannende Sinterplatte 30 angeordnet. In den vom Vorratsbehälterboden und dieser Sinterplatte 30 begrenzten Raum 31 führt eine Stickstoff führende Leitung 32 wodurch sich oberhalb der Sinterplatte ein sogenanntes Fluidbed aufbaut in dem das Katalysatorpulver in fein verteilter Form vorliegt. Innerhalb des Fluidbed ist ein Injektor 33 angeordnet, dem über die Leitung 34 Stickstoff zugeführt wird. Der Stickstoffstrom nimmt einen Teil des den Injektor 33 umgebenden Katalysatorpulvers mit und führt es über die Ausgangsleitung 35 dem außerhalb des Vorratsbehälters 11 angeordneten Injektor 19a zu. Über die Leitung 21a drückt Stickstoff mit $\leq$ 10 bar das dem Injektor zugeführte Katalysatorpulver über die Verbindungsleitung 22 und daran in gleicher Weise wie bei der Ausführung nach Fig. 1 anschließende Verteilungsleitungen 9 in das Innere des Sicherheitsbehälters.

Bei Vorhandensein von größeren Mengen Katalysatorgiften wie z.B. Jod in der Sicherheitsbehälteratmosphäre kann vor der Rekombination mit den gleichen Einrichtungen oder mit zusätzlichen Einrichtungen gleicher Art ein mit Silber präpariertes Pulver auf Aluminiumoxidbasis in den

# 0 019 907

Sicherheitsbehälter eingeblasen werden, um den Katalysatorverbrauch zu reduzieren.

Beträgt die relative Luftfeuchtigkeit mehr als 100% so kann diese durch Einblasen von Silberjodid oder einem hygroskopischen Pulver soweit abgebaut werden, daß die Wirkung des Katalysatorpulvers durch die hohe Luftfeuchte nicht beeinträchtigt wird.

Durch das erfindungsgemäße Rekombinieren des Wasserstoffs bereits innerhalb des Sicherheitsbehälters gelangen keine Spaltprodukte nach außen. Das sedimentierte und kontaminierte Katalysatorpulver bleibt während und nach einem Störfall zunächst im Sicherheitsbehälter und wird erst nach dem Abklingen gefahrlos entfernt. Eine Kontamination der vorgeschlagenen Einrichtung ist deshalb nicht möglich, so daß das Wiederbefüllen der Einrichtung mit Katalysatorpulver gefahrlos erfolgen kann.

## Patentansprüche

1. Verfahren zur Rekombination von im Sicherheitsbehälter (1) einer Kernreaktoranlage eingeschlossenen Wasserstoff, wobei unter Verwendung von Inertgas ein den Wasserstoff abbauendes Pulver in den Sicherheitsbehälter eingebracht wird, dadurch gekennzeichnet, daß als Pulver ein an sich bekannter Katalysator verwenden wird, und daß das Katalysatorpulver mit dem Inertgas aus einem außerhalb des Sicherheitsbehälters (1) angeordneten Vorratsbehälter (11) überwiegend in den oberen Bereich des Sicherheitsbehälters eingeblasen wird.

2. Verfahren nach Anspruch 1, dadurch gekennzeichnet, daß als Katalysatorpulver $\gamma$-Aluminiumoxid mit 0,2% Palladium verwendet wird.

3. Verfahren nach Anspruch 1, dadurch gekennzeichnet, daß Katalysatorpulver mit einer mittleren Korngröße von 20—60 tausendstel Millimeter verwendet wird.

4. Einrichtung zur Durchführung des Verfahrens nach Anspruch 1, wobei unter Verwendung von Inertgas ein den Wasserstoff abbauendes Pulver aus einem außerhalb des Sicherheitsbehälters angeordneten Vorratsbehälter (11) eingebracht wird, dadurch gekennzeichnet, daß eine mit einer Zellenradschleuse (20) versehene Dosierleitung (18) vom Vorratsbehälter (11) zu einem Injektor (19) hinführt, daß der Injektor von dem Inertgasstrom durchflossen ist und an seiner Austrittseite wenigstens eine zum Innenraum des Sicherheitsbehälters führende Verbindungsleitung (22) aufweist.

5. Einrichtung nach Anspruch 4, dadurch gekennzeichnet, daß am Vorratsbehälter (11) im Bereich des Anschlusses der Dosierleitung ein Rüttler (17) angreift.

6. Einrichtung nach Anspruch 4, dadurch gekennzeichnet, daß an einem Deckel (14) des Vorratsbehälters eine Be- und Entlüftungsvorrichtung (16) angeordnet ist.

7. Einrichtung zur Durchführung des Verfahrens nach Anspruch 1, wobei unter Verwendung von Inertgas ein den Wasserstoff abbauendes Pulver aus einem außerhalb des Sicherheitsbehälters angeordneten Vorratsbehälter (11) eingebracht wird, dadurch gekennzeichnet, daß der Vorratsbehälter in seinem unteren Teil eine seinen Querschnitt überspannende Sinterplatte (30) aufweist, daß eine Inertgas führende Leitung mit einem vom Vorratsbehälterboden (12) und der Sinterplatte (30) begrenzten Raum (31) verbunden ist, daß oberhalb der Sinterplatte ein Fluidbed (feinverteilter Katalysator) gebildet ist, und daß im Fluidbed ein Injektor (33) vorgesehen ist, dessen Ausgangsleitung (35) mit einem außerhalb des Vorratsbehälters angeordneten ebenfalls Inertgas beaufschlagten Injektor (19a) verbunden ist.

8. Einrichtung nach Anspruch 4 oder 7, dadurch gekennzeichnet, daß die zum Innenraum des Sicherheitsbehälters führende Verbindungsleitung (22) mit Verteilungsleitungen (9) ausgerüstet ist, die jeweils ein Absperrventil (27) aufweisen.

9. Verwendung der Einrichtung nach Anspruch 4 oder 7, zum Einblasen von pulverförmigen Stoffen zur Absorption von Katalysatorgiften oder zum Aufsaugen von Feuchtigkeit.

## Revendications

1. Procédé de recombinaison d'hydrogène enfermé dans la cuve de sécurité (1) d'une installation de réacteur nucléaire, dans lequel une poudre captant l'hydrogène est introduite dans la cuve de sécurité à l'aide d'un gaz inerte, caractérisé par le fait qu'on utilise comme poudre un catalyseur connu en soi; et par le fait que le catalyseur en poudre est insufflé avec le gaz inerte, à partir d'un réservoir (11) situé à l'extérieur de la cuve de sécurité (1), principalement dans la région supérieure de cette cuve de sécurité.

2. Procédé selon la revendication 1, caractérisé par le fait qu'on utilise comme catalyseur en poudre de l'oxyde d'aluminium $\gamma$ renfermant 0,2% de palladium.

3. Procédé selon la revendication 1, caractérisé par le fait qu'on utilise un catalyseur en poudre présentant une granulométrie moyenne comprise entre 20 et 60 millièmes de millimètre.

4. Dispositif pour la mise en oeuvre du procédé selon la revendication 1, dans lequel une poudre captant l'hydrogène est introduite, à l'aide du gaz inerte, à partir d'un réservoir (11) situé à l'extérieur de la cuve de sécurité, caractérisé par le fait qu'un conduit de dosage (18) équipé d'un sas (20) à roue cellulaire par dudit réservoir (11) pour gagner un injecteur (19); et par le fait que cet injecteur est

4

traversé par le flux de gaz inerte et présente à son côté sortie au moins un conduit de jonction (22) qui débouche dans l'espace interne de la cuve de sécurité.

5. Dispositif selon la revendication 4, caractérisé par le fait qu'un secoueur (17) est en prise avec le réservoir (11) au voisinage du raccordement du conduit de dosage.

6. Dispositif selon la revendication 4, caractérisé par le fait qu'un dispositif (16) d'aération et de ventilation est installé sur un couvercle (14) du réservoir.

7. Dispositif pour la mise en oeuvre du procédé selon la revendication 1, dand lequel une poudre captant l'hydrogène est introduite, à l'aide d'un gaz inerte, à partir d'un réservoir (11) situé à l'extérieur de la cuve de sécurité, caractérisé par le fait que ledit réservoir présente dans sa partie inférieure une plaque frittée (30) qui couvre toute sa section; par le fait qu'un conduit de distribution du gaz inerte communique avec une chambre (31) délimitée par le fond (12) du réservoir et par ladite plaque frittée (30); par le fait qu'un lit fluidisé (catalyseur finement réparti) est formé au-dessus de la plaque frittée; et par le fait qu'il est prévu, dans le lit fluidisé, un injecteur (33) dont le conduit de sortie (35) est raccordé à un injecteur (19a) relégué à l'extérieur du réservoir et également alimenté en gaz inerte.

8. Dispositif selon la revendication 4 ou 7, caractérisé par le fait que le conduit de jonction (22) débouchant dans l'espace interne de la cuve de sécurité est muni de conduits répartiteurs (9) équipés chacun d'un valve d'arrêt (27).

9. Utilisation du dispositif selon la revendication 4 ou 7, pour insuffler des substances pulvérulentes en vue de l'absorption d'inhibiteurs de catalyseurs ou de l'absorption d'humidité par aspiration.

## Claims

1. A procedure for the recombination of hydrogen enclosed in the containment (1) of a nuclear reactor plant, with a hydrogen-fixing powder being introduced into the containment by means of an inert gas, characterized in that the powder is a known catalyst, and that the powdered catalyst is injected by means of the inert gas mainly into the upper region of the containment (1) from a storage vessel (11) arranged outside the containment.

2. A procedure as per claim 1, characterized in that $\gamma$-aluminum oxide containing 0.2% palladium is used as a powered catalyst.

3. A procedure as per claim 1, characterized in that a catalyst powder of a mean grain size of 20—60 thou millimeters is used.

4. A device for performing the procedure as per claim 1, with a hydrogen-fixing powder being introduced into the containment by means of an inert gas from a storage vessel (11) arranged outside the containment, characterized in that a metering line (18) fitted with a cellular wheel feeder (20) leads from the storage vessel (11) to an injector (19); that inert gas flows through the injector and that at least one connecting line (22) will lead from the injector outlet to the interior of the containment.

5. A device as per claim 4, characterized in that a vibrator (17) is arranged at the storage vessel (11) near the point where the metering line is connected to the vessel.

6. A device as per claim 4, characterized in that a ventilation device (16) is arranged at a closure lid (14) of the storage vessel.

7. A device for performing the procedure as per claim 1, with a hydrogen-fixing powder being introduced into the containment by means of an inert gas from a storage vessel (11) outside the containment, characterized in that the lower part of the storage vessel is fitted with a sintering plate (30) spanning the cross section of the vessel, that a line conveying inert gas is connected to a chamber (31) formed between the storage vessel bottom (12) and the sintering plate (30), that a fluid bed (finely distributed catalyst) is formed above the said sintering plate, and that in the fluid bed an injector (33) is provided whose outlet line (35) is connected to another injector (19a) arranged outside the storage vessel and also supplied with inert gas.

8. A device as per claims 4 or 7, characterized in that the connecting line (22) leading to the interior of the containment is fitted with distribution lines (9), each of them equipped with a block valve (27).

9. Use of the device as per claims 4 or 7 for injecting powdered substances to absorb catalyst poisons or to soak up humidity.

## Fig. 1

0 019 907

## Fig. 2

## Fig. 3

2